# EUROPÄISCHE PATENTSCHRIFT

(11) **EP 2 420 735 B1**
(45) Veröffentlichungstag und Bekanntmachung des Hinweises auf die Patenterteilung: **17.05.2017**
(21) Anmeldenummer: 11176503.8
(22) Anmeldetag: 04.08.2011
(51) Int. Cl.: F24C 7/08, A47L 15/42, G05B 19/10, G05B 19/042

(54) **Bedienvorrichtung für ein Hausgerät mit einer Energieversorgungseinrichtung sowie Hausgerät zum Zubereiten von Lebensmitteln mit einer derartigen Bedienvorrichtung**
Operating device for a domestic appliance with an energy supply device and domestic appliance for preparing food with such an operating device
Dispositif de commande pour un appareil ménager doté d'un dispositif d'alimentation en énergie et appareil ménager destiné à la préparation d'aliments à l'aide d'un tel dispositif de commande

(30) Priorität: 20.08.2010 DE 102010039558
(43) Veröffentlichungstag der Anmeldung: 22.02.2012
(73) Patentinhaber: BSH Hausgeräte GmbH, 81739 München (DE)
(72) Erfinder: Has, Uwe, 84579 Unterneukirchen (DE); Schmal, Stefan, 84101 Obersüßbach (DE); Vormann, Ingo, 83413 Fridolfing (DE); Wurnitsch, Ernst, 6382 Kirchdorf in Tirol (AT)

(56) Entgegenhaltungen:
- EP-A2- 1 347 242
- EP-A2- 1 349 281
- EP-A2- 1 607 849
- DE-A1- 10 218 294
- DE-A1-102007 056 416
- DE-A1-102009 027 903
- DE-U1-202005 019 978

## Beschreibung

Die Erfindung betrifft eine Bedienvorrichtung für ein Hausgerät, mit einem Bedienelement, welches auf einer Bedienfläche des mit der Bedienvorrichtung steuerbaren Hausgeräts mittels Magnetkraft haltbar ist und relativ zur Bedienfläche bewegbar und von dort abnehmbar positionierbar ist. Das Bedienelement weist eine integrierte und Energie drahtlos übertragende Energieversorgungseinrichtung auf. Des Weiteren betrifft die Erfindung auch ein Hausgerät zum Zubereiten von Lebensmitteln mit einer derartigen Bedienvorrichtung.

Aus der DE 102 18 294 A1 ist eine Vorrichtung zur Steuerung von elektrisch ansteuerbaren Geräten, insbesondere von elektrischen Haushaltsgeräten bekannt. Dafür ist ein mittels Magnetkraft auf einer Kochfläche anbringbarer und relativ dazu drehbarer Bedienknebel ausgebildet, der darüber hinaus auch zur Lichtemission über Lichtleiter ausgebildet ist. Der Bedienknebel ist im Querschnitt U-förmig nach unten orientiert und somit nach unten hin auch offen ausgebildet.

Darüber hinaus ist aus der DE 20 2005 019 978 U1 eine Bedienvorrichtung für ein Elektrogerät bekannt. Diese weist einen von der Kochfläche abnehmbaren Bedienknebel auf, der lediglich relativ zur Kochfläche um eine senkrechte Achse drehbar ist, um entsprechende Betriebseinstellungen vorzunehmen. Die Bedienvorrichtung umfasst darüber hinaus einen Mikroprozessor mit dem es möglich ist, mehrere Schaltmittel abzufragen bzw. verschiedenste Stellungen eines Schaltmittels zu registrieren. Die Energieversorgung des Mikroprozessors ist vorzugsweise über eine induktive Einkopplung von elektrischer Leistung durch Induktionsspulen innerhalb des Bedienelements und unterhalb der Auflagefläche realisiert. Auch hier kann vorgesehen sein, dass der Drehregler in Form des Bedienelements Leuchtmittel in Form von Leuchtdioden aufweist. Die Energieversorgung erfolgt bevorzugt durch kontaktlose Energieübertragung, vorzugsweise induktiv.

Aus der DE 102 18 294 A1 ist eine Vorrichtung zur Steuerung von elektrisch ansteuerbaren Geräten, insbesondere von elektrischen Haushaltsgeräten bekannt. Die Vorrichtung umfasst ein von einer Bedienfläche abnehmbares Bedienelement.

Darüber hinaus ist aus der EP 1 347 242 A2 eine Bedienvorrichtung für ein Elektrogerät bekannt, bei dem ebenfalls ein Bedienelement mittels Magnetkraft auf einer Glaskeramikkochplatte positionierbar und wieder abnehmbar ist. Zur Energieversorgung des Bedienelements ist eine entsprechende Versorgungsvorrichtung vorgesehen, wobei in einem unteren Gehäusebereich des Bedienelements ein im Querschnitt brückenartiger Ferritkern angeordnet ist, der in seinem horizontalen Steg von einer Spule umwickelt ist.

Es ist Aufgabe der vorliegenden Erfindung, eine Bedienvorrichtung für ein Hausgerät mit einem von einer Bedienfläche des Hausgeräts abnehmbaren Bedienelement, welches dort mittels Haltemagnetkraft gehalten ist, im Hinblick auf drahtlose Energieübertragung zu verbessern.

Diese Aufgabe wird durch eine Bedienvorrichtung, welche die Merkmale nach Anspruch 1 aufweist und ein Hausgerät, welches die Merkmale nach Anspruch 16 aufweist, gelöst.

Eine erfindungsgemäße Bedienvorrichtung für ein Haushaltsgerät umfasst ein Bedienelement, welches auf einer Bedienfläche des mit der Bedienvorrichtung steuerbaren Hausgeräts mittels Magnetkraft haltbar ist. Das Bedienelement ist darüber hinaus relativ zur Bedienfläche bewegbar und von dort abnehmbar positionierbar. Das Bedienelement umfasst eine integrierte und Energie drahtlos übertragende Energieversorgungseinrichtung. In dem Bedienelement ist zumindest eine erste Spule der Energieversorgungseinrichtung angeordnet, welche in ein Ferritmaterial eingebettet ist.

Durch eine derartige Ausgestaltung ist die drahtlose Energieübertragung verbessert. Gerade in relativ kleinen Komponenten, wie es das Bedienelement ist, wird durch eine derartige Ausgestaltung die ausreichende Energieübertragung über eine drahtlose Strecke verbessert. Gerade die relativ schwierige und nur komplex zu bewältigende induktive Energieversorgung kann somit gerade bei derartigen Bedienvorrichtungen verbessert werden.

Es ist das Ferritmaterial auf der der Bedienfläche zugewandten Seite mit einer Nut ausgebildet, in welcher die erste Spule angeordnet ist. Diese versenkte und vom Ferritmaterial umgebene Anordnung der Spule ist im Hinblick auf die induktive Energieübertragung besonders vorteilhaft.

Insbesondere ist das Bedienelement ein Dreh-Kipp-Bedienknebel. Dies bedeutet, dass es zur Betriebseinstellung relativ zu einer vertikalen Achse gekippt werden kann und darüber hinaus auch um die Längsachse gedreht werden kann. Befindet sich das Bedienelement in einer ungekippten Grundstellung, so ist die Längsachse gleich der vertikalen Achse. Die Drehung des Bedienelements zur Einstellung von Betriebsbedingungen kann sowohl im Grundzustand als auch im gekippten Zustand erfolgen.

Insbesondere ist vorgesehen, dass das Bedienelement mit einem innen liegenden Zentralmagneten in Wechselwirkung mit einem unter der Bedienfläche angeordneten weiteren Magneten gehalten ist. Darüber hinaus ist vorzugsweise vorgesehen, dass im Inneren des Bedienelements eine Mehrzahl von Funktionsmagneten angeordnet sind. Mittels dieser kann dann eine gewünschte Betriebsbedingungseinstellung aufgrund von Magnetfeldänderungen erkannt werden. Zur Erkennung sind unter der Bedienfläche eine Mehrzahl von insbesondere Hallsensoren angeordnet, die insbesondere auf einem Schaltungsträger positioniert sind. Wird das Bedienelement gekippt und/oder gedreht, so stellt sich dadurch eine Relativbewegung zu der Bedienfläche und somit auch zu den Hallsensoren dar. Die daraus bewirkte Magnetfeldänderung wird durch diese Sensoren detektiert und die damit verbundene Betriebseinstellung erkannt.

Vorzugsweise sind sechs Funktionsmagnete ausgebildet, die separat und beabstandet zueinander in Umlaufrichtung um die Längsachse äquidistant angeordnet sind.

Insbesondere ist vorgesehen, dass die Bedienvorrichtung für ein Kochfeld ausgebildet ist. Vorzugsweise ist dann vorgesehen, dass durch das Kippen eine Kochzone auswählbar ist und durch Drehen des Bedienelements ein Betriebsparameter dieser ausgewählten Kochzone wertmäßig einstellbar ist. Erfindungsgemäß weist das Bedienelement eine obere Abdeckung auf, welche, insbesondere vollständig, aus dem Ferritmaterial ausgebildet ist. Dadurch können die oben genannten Vorteile nochmals verbessert werden und darüber hinaus eine besonders kompakte und flachbauende Ausgestaltung des Bedienelements gewährleistet werden.

Es kann auch vorgesehen sein, dass das Bedienelement eine obere Abdeckung aufweist, in welcher ein Ferritteil angeordnet ist. Bei dieser Ausgestaltung ist die obere Abdeckung somit nicht vollständig aus dem Ferritmaterial ausgebildet.

Durch diese Ausgestaltung ist somit quasi auch das Ferritteil eingebettet in die obere Abdeckung. Eine Beschädigung des Ferritmaterials kann dadurch verhindert werden.

Vorzugsweise ist somit ein kontaktloses Energieübertragungssystem ausgebildet, welches quasi eine transformatorische Magnetanordnung umfasst. Abweichend vom klassischen Transformator ist hier jedoch kein geschlossener Eisenkern ausgebildet. Vielmehr sind die Spulen der Energieversorgungseinrichtung durch einen Luftspalt getrennt. Dieser Luftspalt ist im Wesentlichen mit dem Material der Bedienfläche, insbesondere Glaskeramik beim Kochfeld, und Kunststoff gefüllt. Die Kunststofffüllung ergibt sich dabei insbesondere dadurch, dass das Bedienelement eine untere Abdeckung aufweist, welche aus Kunststoff ausgebildet ist.

Die induktive Energieversorgung mit Ferritkernen ist hier gewährleistet.

Der Ferritkern bzw. das Ferritmaterial im Bedienelement werden durch den Metallmantel der oberen Abdeckung des Bedienelements geformt. Vorzugsweise ist vorgesehen, dass in der Nut im Ferritmaterial benachbart zur ersten Spule zumindest ein Funktionsmagnet angeordnet. Wie bereits oben erläutert, ist dieser Funktionsmagnet abhängig von der Bewegung des Bedienelements relativ zur Bedienfläche und somit den darunter angeordneten Sensoren zur Betriebsbedingungseinstellung ausgebildet. Durch die Anbringung der ersten Spule und eines Funktionsmagneten in der Nut werden diese unmittelbar nebeneinander positioniert. Dadurch ist eine äußerst kompakte Bauform erzielt.

Vorzugsweise ist eine Mehrzahl von separaten Funktionsmagneten in der Nut beabstandet zueinander angeordnet und insbesondere die Funktionsmagnete radial gesehen weiter außen als die erste Spule angeordnet. Durch die außenliegende Positionierung wird eine unerwünschte Beeinflussung und ein nicht zu nahes Positionieren des Funktionsmagneten zu einem zentral positionierten Haltemagneten erreicht.

Vorzugsweise ist vorgesehen, dass ein Funktionsmagnet direkt an der ersten Spule anliegt.

Besonders bevorzugt ist es, wenn ein Funktionsmagnet, insbesondere alle Funktionsmagneten von der ersten Spule umgeben sind. Ein Funktionsmagnet ist dann in die Spule eingebettet und durch diese umwickelt. Die Funktionalität wird dadurch nochmals verbessert und die Kompaktheit des Bedienelements erhöht.

Insbesondere sind in dem Bedienelement ein mittig positionierter Zentralmagnet bzw. Haltemagnet angeordnet, insbesondere nur ein einziger derartiger Haltemagnet vorgesehen. Bevorzugt ist das Ferritmaterial zwischen dem Haltemagnet und der ersten Spule ausgebildet, so dass der Haltemagnet und die Spule durch dieses Ferritmaterial beabstandet und berührungslos zueinander angeordnet sind. Vorzugsweise ist das Bedienelement durch eine untere Abdeckung nach unten verschlossen, welche insbesondere aus Kunststoff ausgebildet ist.

Vorzugsweise ist unter der Bedienfläche eine zweite Spule der Energieversorgungseinrichtung angeordnet, welche ebenfalls in ein Ferritmaterial eingebettet ist. Die Funktionsweise der Energieversorgungseinrichtung kann dadurch besonders effektiv gestaltet werden.

Vorzugsweise ist die zweite Spule und das Ferritmaterial durch einen Luftspalt beabstandet zur Unterseite der Bedienfläche angeordnet. Dadurch können unerwünschte Beschädigungen der Bedienfläche vermieden werden, wenn diese aufgrund von Krafteinwirkungen von oben sich nach unten in Richtung der zweiten Spule und des Ferritmaterials bewegt. Gerade dann, wenn die Bedienfläche aus Glas oder Glaskeramik ausgebildet ist, können dadurch unerwünschte Beschädigungen vermieden werden.

In besonders vorteilhafter Weise ist vorgesehen, dass die Energieversorgungseinrichtung auch zur drahtlosen Übertragung von Datensignalen ausgebildet ist. Neben dem Austausch von Energieversorgungssignalen kann somit eine Multifunktionalität durch die zusätzliche Übertragungsmöglichkeit von Datensignalen gewährleistet werden. Dazu ist somit bei einer Ausgestaltung der Bedienvorrichtung lediglich eine Einrichtung, nämlich die Energieversorgungseinrichtung vorgesehen.

Durch eine derartige Ausgestaltung kann somit einerseits Bauraum und andererseits können dadurch auch Bauteile eingespart werden.

Die Datensignale können bevorzugt als hochfrequent aufmodulierte Signale auf das Wechselfeld der Energieübertragung vorgesehen sein.

Es kann auch vorgesehen sein, dass eine zur Energieversorgungseinrichtung separat ausgebildete Datenübertragungseinrichtung ausgebildet ist, mit welcher Datensignale drahtlos zum Bedienelement hin und/oder von dem Bedienelement weg übertragbar sind. Es kann hier vorgesehen sein, dass die Datenübertragungseinrichtung ebenfalls induktiv arbeitend ausgebildet ist und entsprechende Spulen aufweist.

Ebenso kann vorgesehen sein, dass die Datenübertragungseinrichtung auf Basis von Infrarotsignalen arbeitet. Bevorzugt ist hier vorgesehen, dass in dem Bedienelement eine Sende-Empfangsdiode angeordnet ist. Diese tauscht Signale mit einer Sende-Empfangsdiode aus, die insbesondere unter der Kochfeldplatte angeordnet ist. Insbesondere erfolgt eine Signalübertragung bei einer Wellenlänge zwischen 950 nm und 1000 nm.

Vorzugsweise weist das Bedienelement eine Leuchteinrichtung mit zumindest einer Lichtquelle auf, welche durch die Energieversorgungseinrichtung mit Energie versorgbar ist.

Bevorzugt ist eine Bedieneinrichtung für ein Hausgerät mit einem Bedienelement ausgebildet, welches auf einer Bedienfläche des mit der Bedienvorrichtung steuerbaren Hausgeräts mittels Magnetkraft haltbar ist und welches relativ zur Bedienfläche bewegbar und von dort abnehmbar positionierbar ist. Das Bedienelement umfasst insbesondere eine lichtabstrahlende Einrichtung.

Insbesondere weist die das Licht abstrahlende Einrichtung eine Projektionsvorrichtung auf, mit welcher abgestrahltes Licht gezielt auf die Bedienfläche des Hausgeräts abstrahlbar ist. Es wird also eine Ausgestaltung geschaffen, bei der nicht nur, wie aus dem Stand der Technik bekannt, von dem Bedienelement Licht unkoordiniert abgestrahlt wird, sondern es soll hier in ganz spezifischer Weise eine Projektion von Licht auf spezifische Stellen der Bedienfläche ermöglicht werden.

Zum einen kann dadurch die Informationsdarstellung für eine Nutzer verbessert werden. Zum anderen können dadurch ganz gezielt Informationen an gewünschten Stellen der Bedienfläche dargestellt werden. Diese Informationen werden somit quasi von dem Bedienelement selbst in ganz gezielter und gerichteter Weise auf die Bedienfläche projiziert.

Vorzugsweise ist die Projektionsvorrichtung zum gezielten Anstrahlen von Symbolen auf der Bedienfläche ausgebildet. Gerade in Wechselwirkung damit kann dem Nutzer situationspezifisch gezielt Information angezeigt werden. Gerade durch das Anstrahlen von Symbolen kann dem Nutzer einfach und intuitiv wahrnehmbar ein Betriebszustand des Hausgeräts und/oder ein durch das Symbol zur vermittelnder sonstiger Informationsgehalt näher gebracht werden.

Vorzugsweise umfasst das gezielte Abstrahlen des Lichts durch die Projektionsvorrichtung eine nach unten gerichtete Vorzugsrichtung. Das heißt, gerade dann, wenn das Bedienelement auf der Bedienfläche angeordnet ist und zur Nutzung vorgesehen ist, wird von dem Bedienelement schräg nach unten eine entsprechende Lichtprojektion vorgenommen. Zum einen kann dadurch eine sehr gezielte Lichtbündelung und somit eine sehr lichtstarke optische Anzeige an gezielten Stellen der Bedienfläche erfolgen. Zum anderen können dadurch unerwünschte Blendungen oder störende Lichtabstrahlung nach oben vermieden werden.

Vorzugsweise umfasst die Projektionsvorrichtung einen zur Außenseite des Bedienelements hin freiliegenden Ring als Lichtleiter, mit welchem das Licht gerichtet auf die Bedienfläche projizierbar ist. Durch dieses spezifisch ausgestaltete ringförmige Element an einer ganz spezifischen Stelle des Bedienelements, nämlich an der Umfangsseite, kann die projizierende Vorzugsrichtung nach unten in besonders vorteilhafter Weise realisiert werden. Es kann dadurch eine Lichtprojektion auf die Bedienfläche geschaffen werden, die quasi weiter außen liegt als die Ausmaße des Bedienelements selbst sind. Eine besonders gute Wahrnehmbarkeit der projizierten Informationen kann somit in der Betrachtung von oben des Bedienelements gewährleistet werden, auch dann, wenn das Bedienelement gerade mit einer Hand gegriffen wird und dadurch eine gewisse Abdeckung des Bedienelements durch die Hand von oben erfolgt.

Durch das spezifische Element eines ringförmigen Lichtleiters kann dadurch auch eine sehr vielfältige Projektionsmöglichkeit geschaffen werden. Insbesondere kann in diesem Zusammenhang eine kontinuierliche Linie auf die Bedienfläche projiziert werden. Zusätzlich oder anstatt dazu kann auch vorgesehen sein, dass durch den freiliegenden Ring nur an Ringabschnitten und somit gegebenenfalls auch nur punktweise eine Lichtprojektion auf die Bedienfläche vorgesehen ist. Dieser freiliegende Ring ist somit ein ganz spezifisches Element in Form und Ausgestaltung, welches in variabler und flexibler Weise eine vielfältige Lichtprojektion auf die Bedienfläche ermöglicht.

Insbesondere ist vorgesehen, dass in dem Bedienelement zumindest eine Lichtquelle, insbesondere eine Leuchtdiode angeordnet ist. Derartige Licht emittierende Bauteile sind besonders klein und energieeffizient betreibbar. Darüber hinaus ermöglichen sie eine hohe Leuchtdichte und gewähren darüber hinaus auch die Möglichkeit unterschiedliche Lichtfarben abzustrahlen.

Vorzugsweise ist vorgesehen, dass das von der zumindest einen Lichtquelle emittierte Licht zur Seite und/oder nach oben und/oder nach unten von dem Bedienelement gerichtet abstrahlbar ist.

Insbesondere ist vorgesehen, dass zumindest eine Lichtquelle im Inneren des Bedienelements angeordnet ist, und zwar derart, dass sie von außen unsichtbar positioniert ist. Durch diese ganz spezifische innenliegende Anordnung kann die Lichtquelle vor Beschädigung geschützt werden. Die unsichtbare Anordnung gewährleistet darüber hinaus auch, dass kein unerwünschter Lichtaustritt erfolgt, sondern dass das von der Lichtquelle emittierte Licht ganz gezielt im Inneren des Bedienelements an gewünschte Lichtaustrittsstellen geleitet werden kann und dadurch nur an diesen Stellen Lichtaustritt erfolgt.

Darüber hinaus kann durch diese Ausgestaltung auch erreicht werden, dass es im Inneren quasi unabhängig ist, wo die Lichtquelle positioniert wird, so dass die geeignetste Position im Hinblick auf Bauraum und Unterbringung von anderen Komponenten in dem Bedienelement gewählt werden kann, ohne dass dies nachteilig wäre im Hinblick auf unerwünschten Lichtaustritt und andererseits gezielten Lichtaustritt an gewünschten Stellen.

Vorzugsweise ist vorgesehen, dass bei einer derartigen Anordnung das von der Lichtquelle emittierte Licht mittels zumindest einem Lichtleiter an eine gezielte Lichtaustrittsstelle des Bedienelements leitbar ist.

Der Lichtleiter kann in diesem Zusammenhang ebenfalls vollständig integriert in dem Bedienelement angeordnet sein. Er kann an eine punktuelle Lichtaustrittsstelle münden oder in einen weiteren größeren Lichtleiter, beispielsweise den bereits oben angesprochenen ringförmigen nach außen hin freiliegenden Lichtleiter münden.

In besonders vorteilhafter Weise ist vorgesehen, dass an einer Lichtaustrittsstelle des Bedienelements eine gezielte Lichtabstrahlung in eine projizierende Vorzugsrichtung ein optisches Element angeordnet ist. In besonders vorteilhafter Weise ist hier vorgesehen, dass an einer Lichtaustrittsstelle ein Prisma angeordnet ist. Durch dieses ganz spezifische Bauteil und deren individuelle Anordnung können ganz gezielt Vorzugsrichtungen im Hinblick auf die Lichtprojektion eingestellt werden. Es können durch dieses Bauteil sogar mehrere Vorzugsrichtungen gleichzeitig vorgegeben werden. So kann in diesem Zusammenhang das Prisma an einer Lichtaustrittsseite an der Mantelwand bzw. Umfangswand des Bedienelements angeordnet sein und zwar derart, dass eine erste Vorzugsrichtung schräg nach unten auf die Bedienfläche gerichtet ist und eine zweite Vorzugsrichtung vertikal nach oben gerichtet ist. Zusätzlich oder anstatt dazu kann eine weitere Vorzugsrichtung dahingehend vorgesehen sein, dass quasi auch eine horizontale Lichtabstrahlung gewährleistet ist.

Insbesondere ist zu erwähnen, dass auch bei mehreren Vorzugsrichtungen keine Lichtabstrahlung über einen großen Winkelbereich und über diesen gleichmäßig erfolgt, sondern dass auch hier nur ganz spezifisch in dieser konkreten Richtung die Lichtabstrahlung und Projektion erfolgt und somit in fokussierter Lichtabstrahlbündelung erfolgt.

Vorzugsweise ist vorgesehen, dass das Bedienelement eine obere und eine untere Abdeckung aufweist, die beide miteinander verbunden sind und ein geschlossenes Bedienelement bilden. Insbesondere ist die Projektionsvorrichtung in der oberen Abdeckung integriert. Dies ist einerseits besonders vorteilhaft im Hinblick auf die möglichen Lichtprojektionen und somit die Position und der Abstand relativ zur Bedienfläche. Andererseits wird dadurch in einem zwischen der oberen Abdeckung und der unteren Abdeckung gebildeten Hohlraum der dadurch erzeugte Bauraum für weitere Komponenten, insbesondere Funktionsmagnete, Haltemagnet, Spulen einer Energieversorgungseinrichtung und dergleichen nicht geschmälert.

Vorzugsweise weist diese Licht abstrahlende Einrichtung eine Mehrzahl an dem Bedienelement angeordneten Lichtquellen auf, die mittels einer Steuereinheit einzeln ansteuerbar sind.

Durch eine derartige Möglichkeit können unterschiedliche optische Anzeige und Projektionen nacheinander oder gleichzeitig erfolgen, wodurch die Anzeigevielfalt wesentlich erhöht wird. Nicht zuletzt kann dadurch auch die Signalisierung präzisiert und für den Nutzer leichter wahrnehmbar ermöglicht werden.

Es können in diesem Zusammenhang Lichtquellen vorgesehen sein, die auch zur Emittierung von Lichtstrahlen unterschiedlicher Lichtfarbe ausgebildet sind. Ebenso kann die Steuerung dahingehend erfolgen, dass eine Lichtquelle blinkend betreibbar ist oder auch kontinuierlich aktiviert ist.

Sind mehrere Lichtquellen oder Lichtaustrittsbereiche des Bedienelements in einer Reihenfolge oder im Kreis oder dergleichen angeordnet, so können diese auch entsprechend nacheinander angesteuert werden, so dass quasi auch ein Lauflicht erzeugt werden kann. Insbesondere kann durch die Beleuchtung eine Information für den Nutzer über spezifische Betriebszustände des Hausgeräts vermittelt werden. Informationen können dabei beispielsweise den eingeschalteten und ausgeschalteten Zustand umfassen, einen Stand-by-Zustand umfassen etc..

Es kann auch vorgesehen sein, dass die das Licht abstrahlende Einrichtung eine Mehrzahl von in dem Bedienelement angeordnete Lichtquellen aufweist, die symmetrisch um eine Längsachse des Bedienelements angeordnet sind und zur Lichtabstrahlung über die Oberseite des Bedienelements ausgebildet sind. Auch dadurch können ganz spezifische und für einen Nutzer bei einer Betrachtung von oben leicht erkennbare Informationen optisch angezeigt werden.

Durch die Mehrzahl und die rotationssymmetrische Anordnung können auch hier variable optische Lichtbilder erzeugt werden. Insbesondere kann durch eine Lauflichtdarstellung im Uhrzeigersinn oder gegen den Uhrzeigersinn auch eine entsprechende Betätigungsrichtung im Hinblick auf Betriebsbedingungseinstellungen für das Bedienelement angezeigt werden.

Vorzugsweise ist vorgesehen, dass zumindest eine Lichtquelle der das Licht abstrahlenden Einrichtung hinter einem Anzeigeelement oder einem Design-Element des Bedienelements in dem Bedienelement angeordnet ist. Durch das Licht der Lichtquelle ist dann das Anzeigeelement für einen Betrachter kenntlich hinterleuchtbar oder das Design-Element hinterleuchtbar. Auch dadurch können ganz spezifische Ausgestaltungen im Hinblick auf Informationsanzeige generiert werden. So kann hier vorgesehen sein, dass bei deaktivierter Lichtquelle auch das Anzeigeelement nicht erkennbar ist und erst mit Aktivierung der Lichtquelle das Anzeigeelement für einen Nutzer erkennbar ist. Dadurch kann ein aufgeräumter für einen Nutzer nicht überfrachteter Anzeigebereich des Bedienelements generiert werden. Im Hinblick auf die Hinterleuchtung eines Design-Elements kann in diesem Zusammenhang hohen Qualitätsansprüchen Rechnung getragen werden.

Vorzugsweise weist das Bedienelement eine integrierte Energieversorgungseinrichtung für die das Licht abstrahlende Einrichtung auf.

Bei einer Bedieneinrichtung für ein Hausgerät mit einem Bedienelement, welches auf einer Bedienfläche des mit der Bedienvorrichtung steuerbaren Hausgeräts mittels Magnetkraft haltbar ist, und bei welcher das Bedienelement relativ zur Bedienfläche bewegbar von dort abnehmbar positionierbar ist, ist eine Licht abstrahlende Einrichtung an dem Bedienelement vorgesehen. Die das Licht abstrahlende Einrichtung umfasst zumindest ein im Inneren des Bedienelements von außen unsichtbar angeordnete Lichtquelle und das von der Lichtquelle emittierte Licht ist mittels zumindest eines Lichtleiters an eine Lichtaustrittsstelle des Bedienelements leitbar.

Durch eine derartige Ausgestaltung kann die Lichtquelle geschützt angeordnet werden, so dass sie keinem Verschleiß unterliegt. Gerade beim Greifen oder beim Herunterfallen des Bedienelements kann somit eine Beschädigung der Lichtquelle vermieden werden.

Darüber hinaus kann durch eine derartige Ausgestaltung eine positionsoptimierte Anbringung der Lichtquelle erzielt werden und Bauraum, welcher für andere Komponenten im Bedienelement benötigt wird, wird nicht eingeschränkt.

Gerade durch die nach außen hin unsichtbare Anordnung der Lichtquelle ist somit erreicht, dass auch nur an gezielten und gewünschten Stellen das Licht austritt und nicht an unerwünschten Stellen Störlicht auftritt.

Vorzugsweise ist vorgesehen, dass mittels spezifischer Lichtabstrahlung durch die das Licht abstrahlende Einrichtung des Bedienelements im Hinblick auf Abstrahlrichtung und/oder Lichtfarbe und/oder Betriebsart der Lichtquelle spezifische Betriebseinstellungen des Hausgeräts optisch anzeigbar sind.

Es kann vorgesehen sein, dass die Lichtquelle auf einem Schaltungsträger angeordnet ist, welche in einer Aussparung, insbesondere an einer Oberseite einer Aussparung in einer oberen Abdeckung des Bedienelements angeordnet ist und die Lichtquelle sich in die obere Abdeckung oberhalb der Oberseite erstreckt. Dadurch ist eine sehr geschützte und platzsparende Anordnung der Lichtquelle möglich, die darüber hinaus auch noch mechanisch stabil positionierbar ist.

Insbesondere ist vorgesehen, dass das Bedienelement quasi eine eigene Elektronik aufweist, die weitere Verbraucher in dem Bedienelement, wie Lichtquellen ansteuert. Die entsprechende Energieversorgung ist durch die Energieversorgungseinrichtung gewährleistet.

Vorzugsweise umfasst das Bedienelement auch zumindest ein berührsensitives Bedienfeld, welches beispielsweise ein punktuell zu bedienender Touch-Sensor oder ein berührsensitiver Schieberegler sein kann.

Die Bedienvorrichtung umfasst insbesondere ein Gesamtsystem aus einer Basiselektronik außerhalb des Bedienelements, vorzugsweise unter der Bedienfläche, und der Elektronik in dem Bedienelement. Die Basiselektronik treibt vorzugsweise die Primärseite eines induktiven Übertragers.
In einer Bauform der Bedienvorrichtung erfolgt nur eine Energieübertragung von der Basiselektronik im Bedienelement. Wird die Energieübertragung aktiviert, leuchten die Lichtquellen im Bedienelement. Durch das Ein- und Ausschalten der Energieübertragung kann auch ein Blinken der Lichtquellen erzeugt werden.

In einer weiteren Bauform erfolgt zusätzlich zur Energieübertragung eine unidirektionale Datenübertragung von der Primärseite zur Sekundärseite.

In einer weiteren Bauform erfolgt zusätzlich zur Energieübertragung einr unidirektionale Datenübertragung von der Sekundärseite zur Primärseite hin, so dass quasi auch eine bidirektionale Datenübertragung realisiert ist. Dadurch kann zum Beispiel ein Datensignal gesendet werden, wenn der Benutzer das Bedienelement mit der Hand oder dem Finger berührt. Mehrere Tasten sind ebenfalls möglich. So kann zum Beispiel eine spezielle Touch-Bedienung eines Sensors getrennt von der schlichten Berührung des Bedienelements oder einer gewohnten Bewegung des Bedienelements erfasst werden, um so durch redundante Informationen die Betriebssicherheit des Systems zu erhöhen. Auch entsprechende Kombinationen der Bauformen sind selbstverständlich möglich.

Insbesondere ist das Bedienelement mit seiner oberen Abdeckung aus Edelstahl ausgebildet.

Im Hinblick auf das oben angesprochene Design-Element, welches durch eine Lichtquelle beleuchtbar oder hinterleuchtbar ist, kann beispielsweise ein Edelstein oder ein sonstiges lichttransparentes Bauteil vorgesehen sein.

Als Lichtquelle kann auch eine Laserdiode vorgesehen sein.

Im Hinblick auf die bereits oben angesprochene Elektronik ist insbesondere vorgesehen, dass die Basiselektronik die Primärspule, welche die zweite Spule unter der Bedienfläche ist, betreibt.

In der Sekundärspule, welche die erste Spule im Bedienelement ist, induziert das Wechselfeld eine Spannung, welche dann gleichgerichtet und geglättet wird und so zur Energieversorgung für die Leuchtdioden verwendbar ist.

Es kann auch eine Elektronik mit Spannung versorgt werden, die zur Steuerung weiterer Funktionen dient.

Vorzugsweise ist vorgesehen, dass an der Oberseite des Bedienelements ein berührsensitives Bedienfeld, insbesondere mittig, ausgebildet ist. Vorzugsweise sind um dieses Bedienfeld herum eine Mehrzahl von Lichtaustrittsabschnitten oder Lichtquellen angeordnet, so dass Licht nach oben von dem Bedienelement abstrahlbar ist.

Es kann auch vorgesehen sein, dass auch das übrige dann aus Metall ausgebildete Gehäuse des Bedienelements insbesondere die obere Abdeckung, als Sensor ausgebildet ist.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Kochfelds mit einem Ausführungsbeispiel einer erfindungsgemäßen Bedienvorrichtung
- Fig. 2: eine schematische Schnittdarstellung durch ein erstes Ausführungsbeispiel einer erfindungsgemäßen Bedienvorrichtung;
- Fig. 3: eine schematische Schnittdarstellung durch ein zweites Ausführungsbeispiel einer erfindungsgemäßen Bedienvorrichtung;
- Fig. 4: eine Draufsicht auf eine Ausführungsform eines Bedienelements einer erfindungsgemäßen Bedienvorrichtung;
- Fig. 5: eine Schnittdarstellung des Bedienelements gemäß Fig. 4;
- Fig. 6: eine Draufsicht auf einen Teilausschnitt eines Kochfelds mit einem Ausführungsbeispiel einer erfindungsgemäßen Bedienvorrichtung; und
- Fig. 7: eine Schnittdarstellung durch das Bedienelement in Fig. 6.

In den Figuren werden gleiche oder funktionsgleiche Elemente mit den gleichen Bezugszeichen versehen.

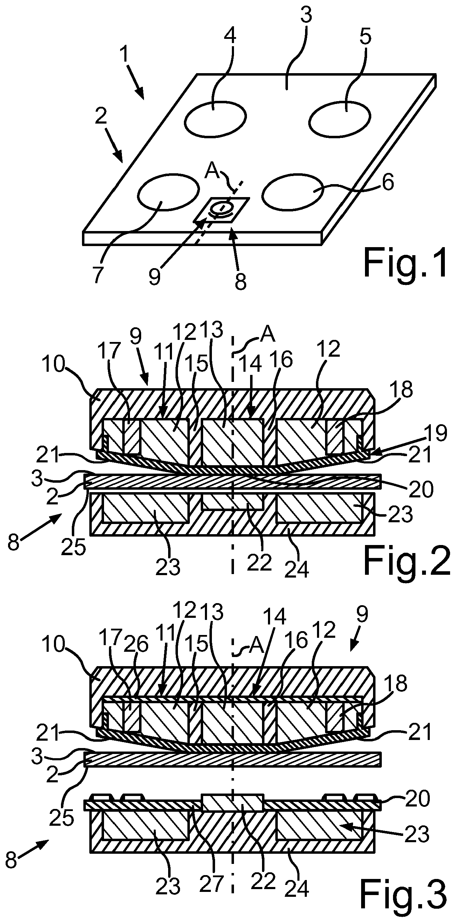

In Fig. 1 ist in einer perspektivischen schematischen Darstellung ein Kochfeld 1 gezeigt, welches ein Hausgerät zum Zubereiten von Lebensmitteln darstellt. Das Kochfeld 1 umfasst eine Kochfeldplatte 2, welche beispielsweise aus Glas oder Glaskeramik ausgebildet ist. Die Kochfeldplatte 2 umfasst eine Oberseite, welche als Kochfläche bzw. Bedienfläche 3 ausgebildet ist. Auf dieser Bedienfläche 3 sind im Ausführungsbeispiel vier Kochzonen 4, 5, 6 und 7 vorgesehen. Auf diesen können Zubereitungsgefäße wie Töpfe und Pfannen oder dergleichen aufgestellt werden und die Kochzonen 4 bis 7 durch entsprechende Heizeinrichtungen, beispielsweise Strahlungsheizkörper oder Induktoren beheizt werden.

Darüber hinaus umfasst das Kochfeld 1 eine Bedienvorrichtung 8. Die Bedienvorrichtung 8 umfasst darüber hinaus ein einziges Bedienelement 9, welches als Dreh-Kipp-Bedienknebel ausgebildet ist. Das diskusförmige Bedienelement 9 ist um seine Längsachse A drehbar. Das Bedienelement 9 ist mittels Magnetkraft auf der Bedienfläche 3 haltbar und relativ gegenüber der Bedienfläche 3 drehbar und kippbar. So kann vorgesehen sein, dass mit einem Kippen um einen Winkel zur Vertikalachse eine der Kochzonen 4 bis 7 auswählbar ist und durch ein Drehen um die Achse A eine Einstellung eines Betriebsparameters dieser ausgewählten Kochzonen 4 bis 7 ermöglicht ist.

Das Bedienelement 9 kann darüber hinaus auch zerstörungsfrei reversibel von der Bedienfläche 2 abgenommen werden, indem durch Überwindung der magnetischen Haltekraft das Bedienelement 9 gelöst wird.

Zur weiteren Erläuterung werden Ausführungsbeispiele der Bedienvorrichtung 8 beschrieben.

In Fig. 2 ist dazu eine Schnittdarstellung durch ein erstes Ausführungsbeispiel gezeigt. Das Bedienelement 9 umfasst eine obere Abdeckung 10, welche im gezeigten Ausführungsbeispiel einstückig ausgebildet ist und darüber hinaus vollständig aus einem Ferritmaterial ausgebildet ist. Die obere Abdeckung kann noch durch eine Kunststoffhülle umgeben sein. Die Bedienvorrichtung 8 umfasst eine drahtlos arbeitende Energieversorgungseinrichtung, welche zur induktiven Energieübertragung ausgebildet ist. Teilkomponenten der Energieübertragungsvorrichtung sind dazu in dem Bedienelement 9 angeordnet. Das Bedienelement 9 weist somit auch eine integrierte drahtlos arbeitende Energieversorgungseinrichtung auf. Dazu ist vorgesehen, dass auf der der Kochfeldplatte 2 zugewandten Seite eine Vertiefung in Form einer Nut 11 ausgebildet ist. In dieser Nut 11 ist eine der Energieversorgungseinrichtung zugehörige erste Spule 12 angeordnet. Die Spule 12, welche die Sekundärspule einer transformatorischen Anordnung darstellt, ist somit von oben und von der Seite durch das Ferritmaterial der oberen Abdeckung 10 umgeben. Zentral mittig in dem Bedienelement 9 ist ein Haltemagnet 13 positioniert. Dieser ist in einer Vertiefung 14 in der oberen Abdeckung 10 passgenau angeordnet. Durch Stege 15 und 16 der oberen Abdeckung 10 ist der Haltemagnet 13 von der ersten Spule 12 beabstandet und berührungslos angeordnet.

In der Nut 11 ist neben der Spule 12 ein Funktionsmagnet 17 und ein weiterer Funktionsmagnet 18 angeordnet. Die Funktionsmagneten 17 und 18 sind in die erste Spule 12 eingebettet.

Insgesamt umfasst das Bedienelement 9 im Ausführungsbeispiel sechs derartiger Funktionsmagnete 17 bzw. 18, die in Umlaufrichtung um die Achse A äquidistant zueinander angeordnet sind.

Wie zu erkennen ist, ist die Spule 12 quasi eingebettet in das Ferritmaterial angeordnet. Nach unten hin ist das Bedienelement 9 durch eine untere Abdeckung 19 verschlossen. Die beiden Abdeckungen 10 und 19 können lösbar miteinander verbunden sein, beispielsweise durch eine Rastverbindung oder eine Schnappverbindung. Durch die beiden Abdeckungen 10 und 19 wird ein vollständig geschlossenes Bedienelement 9 ausgebildet.

Die untere Abdeckung 19 ist vorzugsweise aus Kunststoff. Wie zu erkennen ist, ist die Außenseite der unteren Abdeckung 19 uneben ausgebildet. Zentral mittig ist eine ebene Fläche 20 ausgebildet und in der Darstellung in Fig. 2 ist das Bedienelement 9 in seiner Grundstellung gezeigt. Dies bedeutet, dass es im ungekippten Zustand dargestellt ist. Angrenzend an diesen ebenen mittigen Flächenabschnitt 20 ist dann ein schräg nach oben gerichteter Flächenabschnitt 21 umlaufend um die Achse A ausgebildet. Dadurch kann die Kippbewegung realisiert werden.

Unter der Kochfeldplatte 2 sind weitere Komponenten der Energieversorgungseinrichtung angeordnet. Es ist hier ebenfalls ein weiterer Haltemagnet 22 vorgesehen. Dieser ist ebenso wie eine zweite Spule 23, welche die Primärspule des induktiven Energieübertragungssystems darstellt, in einem Ferritmaterial 24 eingebettet. Es ist zu erkennen, dass das Ferritmaterial 24, die zweite Spule 23 und der Haltemagnet 22 durch einen Luftspalt beabstandet zu einer Unterseite 25 der Kochfeldplatte 2 angeordnet sind.

Auch die zweite Spule 23 ist in das Ferritmaterial quasi passgenau eingebettet.

Die Bedienvorrichtung 8 umfasst darüber hinaus eine nicht dargestellte Elektronik, die zur Erfassung der Bewegung und der Positionszustände des Bedienelements 9 ausgebildet ist. Insbesondere sind dabei Hallsensoren vorgesehen, die die Drehstellung und Kippstellung des Bedienelements 9 anhand Magnetfeldänderungen der Funktionsmagnete 17 und 18 detektieren.

Die Basiselektronik ist darüber hinaus auch zur Ansteuerung der zweiten Spule 23, welche die Primärspule darstellt ausgebildet, über welche dann ein Wechselfeld erzeugt wird und eine Energieübertragung auf die erste Spule 12 erfolgt.

In dem Bedienelement 9 ist vorzugsweise ebenfalls eine in Fig. 2 nicht dargestellte Elektronik vorhanden. Diese kann dann in Verbindung mit der integrierten Energieübertragungseinrichtung eine Energieversorgung und einen Betrieb von weiteren Komponenten, beispielsweise einer Licht abstrahlenden Einrichtung und der Lichtquellen ermöglichen. Darüber hinaus kann auch die Detektion von an dem Bedienelement 9 ausgebildeten berührsensitiven Bedienfeldern und deren Betätigung erfasst werden.

Darüber hinaus kann das Bedienelement 9 auch eine Projektionsvorrichtung zur optischen Lichtprojektion beispielsweise auf die Bedienfläche 3 aufweisen. Entsprechende Ausgestaltungen werden im weiteren noch erläutert.

In Fig. 3 ist ein weiteres Ausführungsbeispiel einer Bedienvorrichtung 8 gezeigt. Hier ist im Unterschied zur Ausgestaltung in Fig. 2 in der oberen Abdeckung 10 ein erster Schaltungsträger 26 integriert. Dieser kann die bereits oben angesprochene Elektronik aufweisen und darüber hinaus auch gegebenenfalls Lichtquellen oder dergleichen aufweisen.

Entsprechend ist in der Darstellung gemäß Fig. 3 ein Schaltungsträger 27 gezeigt. Dieser kann vorzugsweise die oben bereits angesprochene Basiselektronik aufweisen.

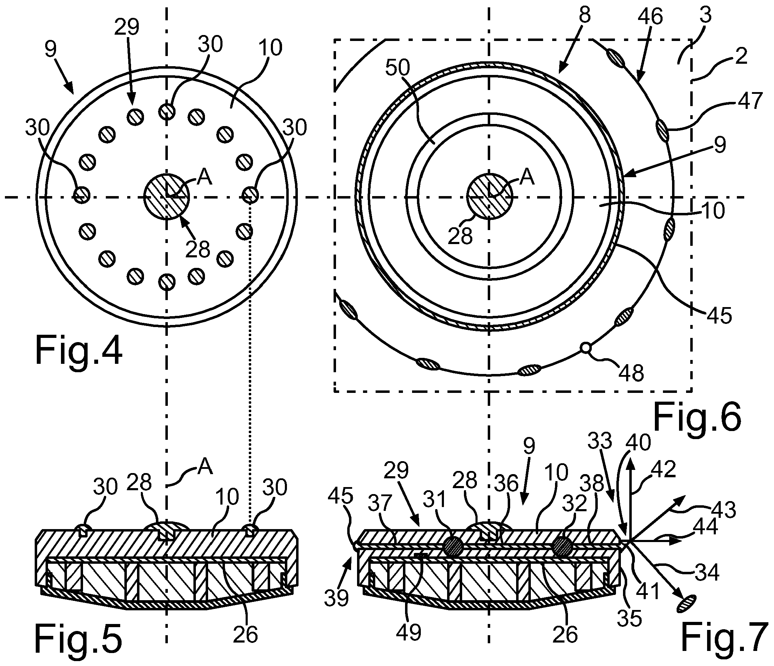

In Fig. 4 ist ein weiteres Ausführungsbeispiel eines Bedienelements 9 einer Bedienvorrichtung 8 gezeigt. Die scheibenförmige Ausgestaltung bei der Draufsichtdarstellung ist zu erkennen. In dieser Ausgestaltung ist vorgesehen, dass in der oberen Abdeckung 10 mittig zentriert ein berührsensitives Bedienfeld 28 vorgesehen ist. Dies kann beispielsweise zum Ein- und Ausschalten der Bedienvorrichtung 8 und somit des Kochfelds 1 vorgesehen sein. Es könne jedoch auch andere Funktionalitäten damit verbunden sein, beispielsweise das Aktivieren oder Deaktivieren einer Licht von dem Bedienelement 9 abstrahlenden Einrichtung 29. Diese umfasst im Ausführungsbeispiel eine Mehrzahl von Lichtquellen 30 (es wird lediglich eine der Lichtquellen mit einem Bezugszeichen versehen, die Weiteren sind in der Darstellung gemäß Fig. 4 in Anzahl und Position eindeutig erkennbar). Die Lichtquellen 30 sind im Ausführungsbeispiel Leuchtdioden, welche in Umlaufrichtung um die Achse A äquidistant zueinander angeordnet sind.

Wie in der schematischen Schnittdarstellung in Fig. 5 dazu zu erkennen ist, sind sowohl das berührsensitive Bedienelement 28 als auch die Lichtquellen 30 in die obere Abdeckung 10 integriert.

Der Übersichtlichkeit dienend sind in der Darstellung gemäß Fig. 5 die in den Fig. 2 und 3 genannten Magnete und Spulen nicht eingezeichnet. Prinzipiell können auch diese Komponenten betreffend die Magnete, Spulen und weiteren Komponenten im Hinblick auf die Elektronik auch in der Ausgestaltung gemäß Fig. 4 und Fig. 5 des Bedienelements 9 vorhanden sein.

Im Hinblick auf die Ausgestaltung der oberen Abdeckung 10 vollständig aus Ferritmaterial, kann auch vorgesehen sein, dass lediglich ein Ferritteil vorgesehen ist, in dem dann die Spule 12 und die Funktionsmagneten 17 und 18 in einer entsprechenden Nut 11 positioniert sind. Auch kann dann der Haltemagnet 13 in einer entsprechenden Aussparung 14 angeordnet sein.

Im Hinblick auf die Ausgestaltung der Bedienvorrichtung 8 kann vorzugsweise vorgesehen sein, dass die Energieversorgungseinrichtung auch zur Datenübertragung ausgebildet ist. Insbesondere ist dabei möglich, dass diese Datenübertragung der Datensignale drahtlos erfolgt. In einer vorteilhaften Ausführung ist vorgesehen, dass ein Datensignal ein auf das Wechselfeld der Energieübertragung hochfrequent aufmoduliertes Signal ist.

Es kann jedoch auch vorgesehen sein, dass separat zu einer Energieversorgungseinrichtung eine Datenübertragungseinrichtung ausgebildet ist, mit welcher Datensignale drahtlos zum Bedienelement 9 und/oder von dem Bedienelement 9 zur Basiselektronik übertragbar sind. Auch hier kann diese Datenübertragungseinrichtung induktiv arbeitend ausgebildet sein oder auf der Basis von IR (Infrarot) -Signalen arbeiten. Dazu kann dann eine IR-Sende-Empfangsdiode in der Nut 11 angeordnet sein, die mit einer insbesondere unter der Kochfeldplatte angeordneten weitere IR-Sende-Empfangsdiode Signale austauscht.

In Fig. 6 ist ein weiteres Ausführungsbeispiel einer Bedienvorrichtung 8 gezeigt, wobei die Draufsicht auf ein auf der Kochfeldplatte 2 positioniertes Bedienelement 9 zu sehen ist. Bei dieser Ausgestaltung umfasst das Bedienelement 9 zumindest eine, vorzugsweise mehrere im Inneren des Bedienelements 9 angeordnete Lichtquellen 31 und 32. Diese sind darüber hinaus so positioniert, dass sie von außen unsichtbar angeordnet sind. Wie in der Schnittdarstellung gemäß Fig. 7 dazu zu erkennen ist, ist auch hier wiederum eine integrierte Einbettung in die obere Abdeckung 10 ausgebildet.

Die Lichtquellen 31 und 32 sind Leuchtdioden. Sie sind einer Licht abstrahlenden Einrichtung 29 zugeordnet. Diese Licht abstrahlende Einrichtung 29 umfasst darüber hinaus auch eine Projektionsvorrichtung 33. Im Ausführungsbeispiel ist dazu vorgesehen, dass diese Projektionsvorrichtung 33 von den Bedienelementen 9 nach außen abgestrahltes Licht als Lichtbündel in eine gezielte Vorzugsrichtung emittieren kann.

Es kann dabei vorgesehen sein, dass das Licht gemäß einer ersten Vorzugsrichtung 34 von einer Mantelseite 35 des Bedienelements 9 schräg gerichtet nach unten auf die Bedienfläche 3 abgestrahlt wird.

Im Ausführungsbeispiel umfasst die das Licht abstrahlende Einrichtung 29 in der oberen Abdeckung 10 integrierte Lichtleiter 36, 37 und 38. Diese weisen Lichtaustrittstellen 39 und 40 auf, aus denen das Licht aus dem Bedienelement 9 austritt. Im Ausführungsbeispiel ist vorgesehen, dass an der Lichtaustrittstelle 40 ein optisches Element angeordnet ist, welches die gezielte Lichtabstrahlung in eine projizierende Vorzugsrichtung gewährleistet. Im Ausführungsbeispiel ist dieses optische Element ein Prisma 41. Dies gewährleistet zum einen die Abstrahlung in die Vorzugsrichtung 34 als auch die Abstrahlung eines Lichtbündels in eine weitere Vorzugsrichtung 42 senkrecht nach unten. Es können zusätzlich oder anstatt dazu auch Ausgestaltungen vorgesehen sein, bei denen eine Vorzugsrichtung 43 schräg nach oben und/oder eine weitere Vorzugsrichtung 44 horizontal nach außen vorgesehen ist und entsprechende Lichtbündel dorthin abgestrahlt werden.

In einer weiteren Ausführung kann auch vorgesehen sein, dass die das Licht abstrahlende Einrichtung 29 eine Projektionsvorrichtung 33 mit einem nach außen und insbesondere zur Umfangsseite bzw. Mantelseite 35 hin freiliegenden ringförmigen Lichtleiter 45 aufweist. Dieser ist vorzugsweise vollständig umlaufend ausgebildet.

Es können in diesem Zusammenhang Ausgestaltungen des Bedienelements 9 vorgesehen sein, die sowohl diesen ringförmigen Lichtleiter 45 als auch ein oder mehrere derartige Prismen 41 aufweisen. Es können jedoch auch Ausgestaltungen vorgesehen sein, die nur diesen ringförmigen Lichtleiter 45 und keine derartigen Prismen 41 aufweist. Ebenso sind Ausgestaltungen möglich, die keinen derartigen ringförmigen Lichtleiter 45 und ein oder mehrere derartige Prismen 41 an den Austrittsstellen 39 bzw. 40 aufweisen.

In der Darstellung gemäß Fig. 6 ist der ringförmige umlaufende Lichtleiter 45 zu erkennen. Es kann nur in Verbindung mit der Projektionsvorrichtung 33 mit der Vorzugsrichtung 34 somit eine schräg nach außen gerichtete Lichtprojektion gezielt auf die Oberseite bzw. Bedienfläche 3 ermöglicht werden. Es kann dadurch ein vollständig kontinuierlich umlaufender Lichtring 46 auf der Bedienfläche 3 erzeugt werden. Zusätzlich oder anstatt dazu können auch ganz gezielt größere Lichtflecken 47 generiert werden.

Dadurch können ganz spezifische Betriebszustände oder Informationen auf die Oberfläche bzw. die Bedienfläche 3 projiziert werden.

Insbesondere kann abhängig von der Ausgestaltung der Kochfeldplatte 2 und der verwendeten Lichtstrahlung eine Konstellation geschaffen werden, bei der auch nur ganz spezifische auf der Bedienfläche 3 ausgebildete Symbole 48 angestrahlt und beleuchtet werden. Die Position, Formgebung und Anzahl derartiger Symbole 48 ist in Fig. 6 lediglich beispielhaft. Durch Drehen und/oder Kippen des Bedienelements 9 können die Lichtprojektionen in vielfältiger Weise geändert und variiert werden und die angestrahlte Stelle auf der Bedienfläche 3 geändert werden.

Die insbesondere auf dem Schaltungsträger 26 ausgebildete Elektronik kann auch eine Steuereinheit 49 umfassen, mittels welcher die Lichtquellen 31 und 32 gezielt im Betrieb ansteuerbar sind. Dabei kann eine alternierende Ansteuerung, ein Blinken oder dergleichen ermöglicht werden. Der Schaltungsträger 26 liegt an einer Oberseite einer Aussparung der oberen Abdeckung 10 an. Die Lichtquellen 31 und 32 erstrecken sich vom Schaltungsträger 26 durch die Oberseite in das Material der oberen Abdeckung 10 hinein.

Es kann auch vorgesehen sein, dass das Bedienelement 9, insbesondere in der Abdeckung 10, ein Anzeigeelement und/oder ein Design-Element aufweist, welches durch Lichtquellen in dem Bedienelement 9 hinterleuchtbar ist.

Ein Design-Element kann beispielsweise ein umlaufender Ring 50 sein. Ein Anzeigeelement kann beispielsweise auch ein berührsensitives Bedienelement 28 sein. Im aktiven Zustand kann es dann hinterleuchtet werden, so dass es für den Nutzer jederzeit erkennbar ist. Ist die Lichtquelle zum Hinterleuchten dieses Anzeigeelements deaktiviert, so kann vorzugsweise vorgesehen sein, dass die gestalterische und farbliche Abstimmung des Bedienfelds 28 an die weitere Umgebung und Ausgestaltung der oberen Abdeckung 10 angepasst ist. Ist die Lichtquelle zum Hinterleuchten des Bedienfelds 28 deaktiviert, so kann somit quasi das Bedienelement 28 nicht mehr ohne Weiteres erkannt werden.

Auch die Ausgestaltung gemäß Fig. 6 und Fig. 7 kann zusätzlich auch eine Energieversorgungseinrichtung aufweisen, wie sie in den Ausgestaltungen gemäß Fig. 2 oder 3 dargestellt ist.

### Bezugszeichenliste

- 1: Kochfeld
- 2: Kochfeldplatte
- 3: Bedienfläche
- 4, 5, 6, 7: Kochzonen
- 8: Bedienvorrichtung
- 9: Bedienelement
- 10: Abdeckung
- 11: Nut
- 12: Spule
- 13: Haltemagnet
- 14: Vertiefung
- 15, 16: Stege
- 17, 18: Funktionsmagnete
- 19: Abdeckung
- 20, 21: Flächen
- 22: Haltemagnet
- 23: Spule
- 24: Ferritmaterial
- 25: Unterseite
- 26, 27: Schaltungsträger
- 28: Bedienfeld
- 29: Einrichtung
- 30, 31, 32: Lichtquellen
- 33: Projektionsvorrichtung
- 34: Vorzugsrichtung
- 35: Mantelseite
- 36, 37, 38: Lichtleiter
- 39, 40: Lichtaustrittstellen
- 41: Prisma
- 42, 43, 44: Vorzugsrichtungen
- 45: Lichtleiter
- 46: Lichtring
- 47: Lichtflecken
- 48: Symbole
- 49: Steuereinheit
- 50: Ring

## Patentansprüche

1. Bedienvorrichtung für ein Hausgerät (1), mit einem Bedienelement (9), welches auf einer Bedienfläche (3) der Bedienvorrichtung des mit der Bedienvorrichtung (8) steuerbaren Hausgeräts (1) mittels Magnetkraft haltbar ist und relativ zur Bedienfläche (3) bewegbar und von dort abnehmbar positionierbar ist, und das Bedienelement (9) eine integrierte und Energie drahtlos übertragende Energieversorgungseinrichtung aufweist, wobei in dem Bedienelement (9) zumindest eine erste Spule (12) der Energieversorgungseinrichtung angeordnet ist, welche in ein Ferritmaterial (24) eingebettet ist, wobei das Ferritmaterial auf der der Bedienfläche (3) zugewandten Seite eine Nut (11) aufweist, in welcher die erste Spule (12) angeordnet ist, **dadurch gekennzeichnet, dass** das Bedienelement (9) eine obere Abdeckung (10) aufweist, welche, insbesondere vollständig, aus dem Ferritmaterial ausgebildet ist.

2. Bedienvorrichtung nach Anspruch 1, **dadurch gekennzeichnet, dass** in der Nut (11) benachbart zur ersten Spule (12) zumindest ein Funktionsmagnet (17, 18), welcher in magnetischer Wechselwirkung mit Sensoren außerhalb des Bedienelements (9) abhängig von einer Bewegung des Bedienelements (9) auf der Bedienfläche (3) zur Betriebsbedingungseinstellung des Hausgeräts (1) angeordnet ist.

3. Bedienvorrichtung nach Anspruch 2, **dadurch gekennzeichnet, dass** eine Mehrzahl von Funktionsmagneten (17, 18) in der Nut (11) beabstandet zueinander angeordnet ist und in die erste Spule (12) eingebettet ist.

4. Bedienvorrichtung nach einem der vorhergehenden Ansprüche, **dadurch gekennzeichnet, dass** in dem Bedienelement (9) ein mittig positionierter Haltemagnet (13) angeordnet ist, und das Ferritmaterial zwischen dem Haltemagnet (13) und der ersten Spule (12) ausgebildet ist.

5. Bedienvorrichtung nach einem der vorhergehenden Ansprüche, **dadurch gekennzeichnet, dass** das Bedienelement (9) durch eine untere Abdeckung (19) nach unten verschlossen ist, welche insbesondere aus Kunststoff ausgebildet ist.

6. Bedienvorrichtung nach einem der vorhergehenden Ansprüche, **dadurch gekennzeichnet, dass** unter der Bedienfläche (3) eine zweite Spule (23) der Energieversorgungseinrichtung angeordnet ist, welche in ein Ferritmaterial (24) eingebettet ist.

7. Bedienvorrichtung nach Anspruch 6, **dadurch gekennzeichnet, dass** die zweite Spule (23) und das Ferritmaterial (24) durch einen Luftspalt beabstandet zur Unterseite (25) einer die Bedienfläche (3) aufweisenden Platte (2) angeordnet sind.

8. Bedienvorrichtung nach einem der vorhergehenden Ansprüche, **dadurch gekennzeichnet, dass** die Energieversorgungseinrichtung auch zur drahtlosen Übertragung von Datensignalen ausgebildet ist.

9. Bedienvorrichtung nach Anspruch 8, **dadurch gekennzeichnet, dass** ein Datensignal ein auf das Wechselfeld der Energieübertragung aufmoduliertes Signal ist.

10. Bedienvorrichtung nach einem der Ansprüche 1 bis 7, **dadurch gekennzeichnet, dass** eine zur Energieversorgungseinrichtung separat ausgebildete Datenübertragungseinrichtung ausgebildet ist, mit welcher Datensignale drahtlos zum Bedienelement (9) und/oder von dem Bedienelement (9) übertragbar sind.

11. Bedienvorrichtung nach einem der vorhergehenden Ansprüche, **dadurch gekennzeichnet, dass** das Bedienelement (9) eine Leuchteinrichtung (29) aufweist, welche durch die Energieversorgungseinrichtung mit Energie versorgbar ist.

12. Hausgerät zum Zubereiten von Lebensmitteln, insbesondere Kochfeld, welche eine Bedienvorrichtung (8) nach einem der vorhergehenden Ansprüche aufweist.

## Claims

1. Operating device for a domestic appliance (1), having a control element (9), which can be held by means of magnetic force on a control panel (3) of the operating device of the domestic appliance (1) which can be controlled with the operating device (8) and can be moved relative to the control panel (3) and can be positioned so as to be removable therefrom, and the control element (9) has an integrated energy supply facility that wirelessly transmits energy, wherein at least one first coil (12), which is embedded in a ferrite material (24), of the energy supply facility is arranged in the control element (9), wherein the ferrite material has a groove (11) on the side facing the control panel (3), in which groove the first coil (12) is arranged, **characterised in that** the control element (9) has an upper cover (10) which, in particular completely, is embodied from the ferrite material.

2. Operating device according to claim 1, **characterised in that** at least one functional magnet (17, 18) which is arranged in magnetic interaction with sensors outside of the control element (9) as a function of a movement of the control element (9) on the control panel (3) for setting the operating conditions of the domestic appliance (1) is arranged in the groove (11) adjacent to the first coil (12).

3. Operating device according to claim 2, **characterised in that** a plurality of functional magnets (17, 18) is arranged at a distance from one another in the groove (11) and is embedded in the first coil (12).

4. Operating device according to one of the preceding claims, **characterised in that** a centrally positioned holding magnet (13) is arranged in the control element (9) and the ferrite material is embodied between the holding magnet (13) and the first coil (12).

5. Operating device according to one of the preceding claims, **characterised in that** the control element (9) is downwardly closed by a lower cover (19), which is embodied in particular from plastic.

6. Operating device according to one of the preceding claims, **characterised in that** a second coil (23), which is embedded in a ferrite material (24), of the energy supply facility is arranged below the control panel (3).

7. Operating device according to claim 6, **characterised in that** the second coil (23) and the ferrite material (24) are arranged at a distance from the lower side (25) of a plate (2) having the control panel (3) by means of an air gap.

8. Operating device according to one of the preceding claims, **characterised in that** the energy supply facility is also embodied for the wireless transmission of data signals.

9. Operating device according to claim 8, **characterised in that** a data signal is a signal modulated to the alternating field of the energy transmission.

10. Operating device according to one of claims 1 to 7, **characterised in that** a data transmission facility embodied separately to the energy supply facility, with which data signals can be transmitted wirelessly to the control element (9) and/or from the control element (9).

11. Operating device according to one of the preceding claims, **characterised in that** the control element (9) has a lighting facility (29), which can be supplied with energy by the energy supply facility.

12. Domestic appliance for preparing food, in particular hob, which has an operating device (8) according to one of the preceding claims.

## Revendications

1. Dispositif de commande pour un appareil ménager (1), avec un élément de commande (9), qui peut être maintenu au moyen d'une force magnétique sur une surface de commande (3) du dispositif de commande de l'appareil ménager (1) réglable grâce au dispositif de commande (8), et qui peut être déplacé par rapport à la surface de commande (3) et qui peut être positionné amovible par rapport à celle-ci, et l'élément de commande (9) présente un appareil intégré d'alimentation en énergie transférant sans fil de l'énergie, et en ce que au moins une première bobine (12) de l'appareil d'alimentation en énergie, qui est intégrée dans un matériau à base de ferrite (24), est agencée dans l'élément de commande (9), et en ce que le matériau à base de ferrite présente, sur le côté tourné vers la surface de commande (3), une rainure (11) dans laquelle est agencée la première bobine (12), **caractérisé en ce que** l'élément de commande (9) présente un couvercle supérieur (10), qui est formé, en particulier intégralement, à partir du matériau à base de ferrite.

2. Dispositif de commande selon la revendication 1, **caractérisé en ce qu'**au moins un aimant fonctionnel (17, 18) est agencé dans la rainure (11) au voisinage de la première bobine (12) et se trouve en interaction magnétique avec des capteurs situés à l'extérieur de l'élément de commande (9) en fonction d'un déplacement de l'élément de commande (9) sur la surface de commande (3) en vue d'un ajustement des conditions de fonctionnement de l'appareil ménager (1).

3. Dispositif de commande selon la revendication 2, **caractérisé en ce qu'**une pluralité d'aimants fonctionnels (17, 18) sont intégrés espacés les uns des autres dans la rainure (11) et sont noyés dans la première bobine (12).

4. Dispositif de commande selon l'une quelconque des revendications précédentes, **caractérisé en ce qu'**un aimant de maintien (13) positionné de manière centrale est agencé dans l'élément de commande (9), et le matériau à base de ferrite est formé entre l'aimant de maintien (13) et la première bobine (12).

5. Dispositif de commande selon l'une quelconque des revendications précédentes, **caractérisé en ce que** l'élément de commande (9) est fermé vers le bas grâce à un couvercle inférieur (19), qui est formé en particulier à partir de plastique.

6. Dispositif de commande selon l'une quelconque des revendications précédentes, **caractérisé en ce qu'**une deuxième bobine (23) de l'appareil d'alimentation en énergie est agencée sous la surface de commande (3), ladite bobine étant intégrée dans un matériau à base de ferrite (24).

7. Dispositif de commande selon la revendication 6, **caractérisé en ce que** la deuxième bobine (23) et le matériau à base de ferrite (24) sont agencés espacés grâce à un entrefer par rapport à un côté inférieur (25) d'une plaque (2) présentant la surface de commande (3).

8. Dispositif de commande selon l'une quelconque des revendications précédentes, **caractérisé en ce que** l'appareil d'alimentation en énergie est également formé pour une transmission sans fil de signaux de données.

9. Dispositif de commande selon la revendication 8, **caractérisé en ce qu'**un signal de données est un signal modulé sur le champ alternatif du transfert d'énergie.

10. Dispositif de commande selon l'une quelconque des revendications 1 à 7, **caractérisé par** la réalisation d'un appareil de transmission de données formé séparément de l'appareil d'alimentation en énergie, avec lequel des signaux de données peuvent être transmis sans fil vers l'élément de commande (9) et/ou à partir de l'élément de commande (9).

11. Dispositif de commande selon l'une quelconque des revendications précédentes, **caractérisé en ce que** l'élément de commande (9) présente un appareil d'éclairage (29) qui peut être alimenté en énergie grâce à l'appareil d'alimentation en énergie.

12. Appareil ménager destiné à la préparation d'aliments, en particulier plaque de cuisson, qui présente un dispositif de commande (8) selon l'une quelconque des revendications précédentes.
